# EUROPEAN PATENT APPLICATION

(11) **EP 4 589 962 A1**
(43) Date of publication of application: **23.07.2025**
(21) Application number: 23864765.5
(22) Date of filing: 14.09.2023
(51) Int. Cl.: H04N 21/431

(54) **RESOURCE PROCESSING METHOD AND APPARATUS, ELECTRONIC DEVICE, STORAGE MEDIUM, AND PROGRAM PRODUCT**

(30) Priority: 14.09.2022 CN 202211118061
(71) Applicant: DOUYIN VISION CO., LTD., Beijing 100041 (CN)
(72) Inventor: YUAN, Shuai, Beijing 100028 (CN); GONG, Jingwen, Beijing 100028 (CN); ZHANG, Fenghua, Beijing 100028 (CN); LIU, Haitian, 018960 (SG); HAO, Zhenxin, Beijing 100028 (CN)
(74) Representative: Dentons UK and Middle East LLP
(86) International application number: PCT/CN2023/118868
(87) International publication number: WO 2024/056035

(57) **Abstract**

The present disclosure relates to a resource processing method and apparatus, an electronic device, a storage medium, and a program product, which can improve the flexibility of resource presentation modes. The method comprises : displaying a resource panel on a live streaming room page, the resource panel comprising a plurality of first resource options and a resource package control; displaying a multi-resource editing window in response to a trigger operation on the resource package control, the multi-resource editing window comprising a plurality of second resource options and a sending control, and the plurality of second resource options comprising at least one first resource option; in response to a trigger operation on at least one target option in the plurality of second resource options, determining a plurality of resources to be processed corresponding to the at least one target option; and sending a processing request of a target resource package to a server in response to a trigger operation on the sending control, the target resource package being generated according to the plurality of resources to be processed, and the processing request being used for instructing to send the target resource package to a livestreamer client.

## Description

This application claims priority to Chinese Patent Application No. 202211118061.9, filed on September 14, 2022, the content of which is hereby incorporated by reference in its entirety as part of this application.

### TECHNICAL FIELD

Embodiments of the present disclosure relate to a resource processing method, a resource processing apparatus, an electronic device, a storage medium, and a program product.

### BACKGROUND

With the rapid development of network technologies, live streaming is becoming increasingly popular among users.

During a live streaming process, the effective interaction between a live streaming viewer and a live streamer may enhance the atmosphere of a live-stream room. For example, the live streaming viewer giving resources (e.g., gifts) to the live streamer is a typical way of interaction. The resource gifting process is that the viewer may select a resource to be gifted in a resource panel and then send the selected resource to be gifted, and after the successful sending, the resource gifting information will be displayed in the corresponding live-stream room.

However, the current way of selecting a resource to be gifted in the resource panel is relatively single, and there is an urgent need for an effective interaction solution that can make the multi-resource gifting way more flexible.

### SUMMARY

In order to solve the above technical problems or at least partially solve the above technical problems, the present disclosure provides a resource processing method, a resource processing apparatus, an electronic device, a storage medium, and a program product.

According to a first aspect of the embodiments of the present disclosure, a source processing method is provided. The resource processing method includes: displaying a resource panel on a live-stream room page, wherein the resource panel includes multiple first resource options and a resource pack control; displaying a multi-resource edit window in response to a triggering operation on the resource pack control, wherein the multi-resource edit window includes multiple second resource options and a sending control, and the multiple second resource options include at least one first resource option; determining multiple resources to be processed corresponding to at least one target option in response to a triggering operation on the at least one target option of the multiple second resource options; and sending a processing request for a target resource pack to a server in response to a triggering operation on the sending control, wherein the target resource pack is generated based on the multiple resources to be processed, and the processing request is used for instructing to send the target resource pack to a live streamer client.

According to a second aspect of the embodiments of the present disclosure, a resource processing apparatus is provided. The resource processing apparatus includes: a display module, configured to display a resource panel on a live-stream room page, wherein the resource panel includes multiple first resource options and a resource pack control; and the display module is further configured to display a multi-resource edit window in response to a triggering operation on the resource pack control, wherein the multi-resource edit window includes multiple second resource options and a sending control, and the multiple second resource options include at least one first resource option; a determination module, configured to determine multiple resources to be processed corresponding to at least one target option in response to a triggering operation on the at least one target option of the multiple second resource options; and a sending module, configured to send a processing request for a target resource pack to a server in response to a triggering operation on the sending control, wherein the target resource pack is generated based on the multiple resources to be processed, and the processing request is used for instructing to send the target resource pack to a live streamer client.

According to a third aspect of the embodiments of the present disclosure, an electronic device is provided. The electronic device includes a processor, a memory, and a computer program stored on the memory and executable on the processor. When executed by the processor, the computer program implements the resource processing method as described in the first aspect.

According to a fourth aspect of the embodiments of the present disclosure, a computer-readable storage medium storing a computer program is provided. The computer program, when executed by a processor, implements the resource processing method as described in the first aspect.

According to a fifth aspect of the embodiments of the present disclosure, a computer program product is provided. The computer program product includes a computer program that, when run on a processor, causes the processor to execute the computer program, implementing the resource processing method as described in the first aspect.

According to a sixth aspect of the embodiments of the present disclosure, a chip is provided. The chip includes a processor and a communication interface, wherein the communication interface is coupled to the processor for executing program instructions to implement the resource processing method as described in the first aspect.

### BRIEF DESCRIPTION OF DRAWINGS

The accompanying drawings are incorporated into the specification and form a part of the specification, illustrating embodiments in accordance with the present disclosure and used together with the specification to explain the principles of the present disclosure.

In order to provide a clearer explanation of the technical solution of the disclosed embodiments, a brief introduction will be given below to the accompanying drawings required for the embodiments. It is evident that for those skilled in the art, other drawings can be obtained based on these drawings without the need for creative labor.
Fig. 1 is a schematic structural diagram of a resource processing system according to an embodiment of the present disclosure;
Fig. 2 is a schematic flowchart 1 of a resource processing method according to an embodiment of the present disclosure;
Fig. 3 is an interface diagram 1 of a resource processing method according to an embodiment of the present disclosure;
Fig. 4 is an interface diagram 2 of a resource processing method according to an embodiment of the present disclosure;
Fig. 5 is an interface diagram 3 of a resource processing method according to an embodiment of the present disclosure;
Fig. 6 is an interface diagram 4 of a resource processing method according to an embodiment of the present disclosure;
Fig. 7A is an interface diagram 5 of a resource processing method according to an embodiment of the present disclosure;
Fig. 7B is an interface diagram 6 of a resource processing method according to an embodiment of the present disclosure;
Fig. 7C is an interface diagram 7 of a resource processing method according to an embodiment of the present disclosure;
Fig. 8 is a schematic flowchart 2 of a resource processing method according to an embodiment of the present disclosure;
Fig. 9A is an interface diagram 8 of a resource processing method according to an embodiment of the present disclosure;
Fig. 9B is an interface diagram 9 of a resource processing method according to an embodiment of the present disclosure;
Fig. 9C is an interface diagram 10 of a resource processing method according to an embodiment of the present disclosure;
Fig. 9D is an interface diagram 11 of a resource processing method according to an embodiment of the present disclosure;
**Fig.** 10 is a structural block diagram of a resource processing apparatus according to an embodiment of the present disclosure; and
Fig. 11 is a structural block diagram of an electronic device according to an embodiment of the present disclosure.

### DETAILED DESCRIPTION

In order to have a clearer understanding of the above objectives, features, and advantages of the present disclosure, further description of the disclosed solution will be provided below. It should be noted that, in the absence of conflicts, the disclosed embodiments and features in the embodiments can be combined with each other.

The following description elaborates on many specific details to facilitate a full understanding of the present disclosure, but the present disclosure may also be implemented in other ways different from those described herein. Obviously, the embodiments described herein are only a part of the disclosed embodiments, not all of them.

The terms "first", "second", etc. in the present disclosure are used to distinguish similar objects and not to describe a specific order or sequence. It should be understood that the data used in this way can be interchanged in appropriate circumstances, so that the embodiments disclosed herein can be implemented in order other than those illustrated or described herein, and the objects distinguished by "first", "second", etc. are usually of the same class, without limiting the number of objects, for example, the first object can be one or multiple. In addition, in the specification and claims, "and/or" represents at least one of the connected objects, and the character "/" generally indicates a "or" relationship between the related objects.

In an embodiment of the present disclosure, the resource processing method includes: displaying a resource panel on a live-stream room page (the resource panel contains multiple first resource options and a resource pack control); displaying a multi-resource edit window in response to a triggering operation on the resource pack control (the multi-resource edit window contains multiple second resource options and a sending control); determining multiple resources to be processed corresponding to at least one target option in response to a triggering operation on the at least one target option of the multiple second resource options; and sending a processing request for a target resource pack to a sever in response to a triggering operation on the sending control, where the target resource pack is generated based on the multiple resources to be processed, and the processing request is used for instructing to send the target resource pack to a live streamer client. In the embodiments of the present disclosure, the multi-resource edit window is displayed by the triggering operation on the resource pack control in the resource panel, and then the purpose of gifting the target resource pack corresponding to the multiple resources to be processed to the live streamer client is achieved by a triggering operation on at least one target option tab in the multi-resource edit window. Therefore, with the resource pack control added to the resource panel, the way of gifting multiple resources in the multi-resource edit window corresponding to the resource pack control can be added, and the way of gifting multiple resources in combination can be achieved in the multi-resource edit window, such that different ways of resource gifting can be achieved in the resource panel, errors in the ways of resource gifting can be avoided, and thus, the flexibility in resource gifting and the man-machine interaction performance can be improved.

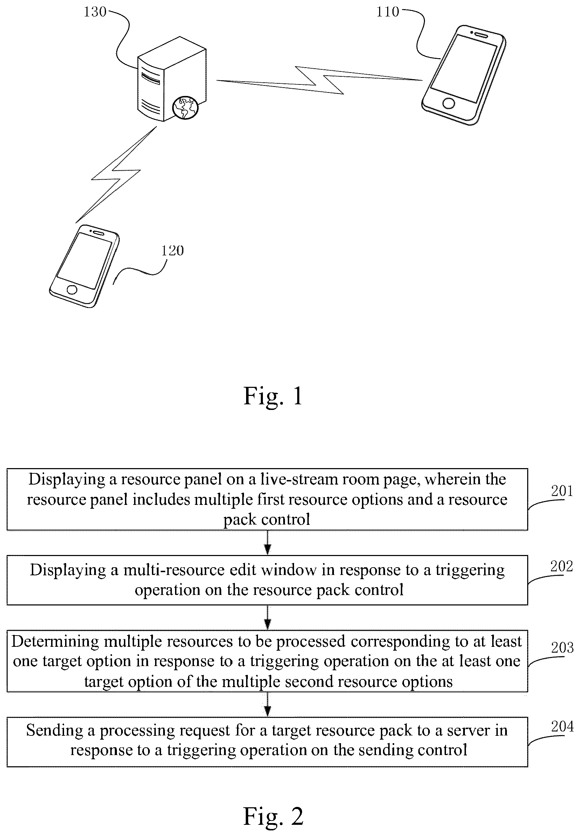

First, Fig. 1 shows a resource processing system according to an embodiment of the present disclosure. As shown in Fig. 1, the resource processing system includes a sending client 110, at least one playing client 120 (only one playing client is shown as an example in the figure) and a server 130. The sending client 110 may be any one of viewer clients watching a live-stream room, and the at least one playing client 120 may be a live streamer client of the live-stream room or another viewer client watching the live-stream room. The sending client 110 is one of the viewer clients watching the live-stream room and gifting a target resource pack to the live streamer client, the playing client 120 is a client that may play a combination display dynamic effect of the target resource pack, and the sending client 110 may also be a playing client.

In the embodiments of the present disclosure, the client maybe a mobile electronic device or a non-mobile electronic device. The mobile electronic device may be a cell phone, a tablet computer, a laptop computer, a palmtop computer, a vehicle-mounted terminal, a wearable device, an ultra-mobile personal computer (UMPC), a netbook, or a personal digital assistant (PDA); the non-mobile electronic device may be a personal computer (PC), a television (TV) and the like; and the embodiments of the present disclosure do not impose specific limitations thereon.

A resource processing method according to an embodiment of the present disclosure is described in detail below through specific embodiments and application scenarios thereof with reference to the accompanying drawings.

As shown in Fig. 2, an embodiment of the present disclosure provides a resource processing method, which includes steps 201 to 204 as below.

201: displaying a resource panel on a live-stream room page, the resource panel containing multiple first resource options and a resource pack control.

Each of the first resource options is used for indicating a resource. The first resource option may be a resource identification (ID) or a resource control, which is not limited herein. A user selects one first resource option, which means that a resource indicated by the first resource option selected by the user is determined as a resource to be processed.

The resource may be a gift. In the embodiments of the present disclosure, a gift system may consist of content of multiple dimensions, may include at least one selected from the group of: a physical object, a virtual object, a scenario object, an animal, a household item, and may further include other types of content, which is not limited herein.

Exemplarily, if the first resource option is a flower option, the resource indicated by the first resource option is a flower; if the first resource option is a car option, the resource indicated by the first resource option is a car; and if the first resource option is a balloon option, the resource indicated by the first resource option is a balloon.

The resource pack control is an entry for triggering to enter the multi-resource edit window.

202: displaying the multi-resource edit window in response to a triggering operation on the resource pack control.

The multi-resource edit window contains multiple second resource options and a sending control, and the multiple second resource options include at least one first resource option.

The multi-resource edit window is configured to edit resources included in a resource pack to be generated, and the user may add multiple resources corresponding to the at least one second resource option to the resource pack to be generated (a multi-resource confirmation window) by selecting the at least one second resource option in the multi-resource edit window.

Optionally, the above step 202 may refer to updating the resource panel to the multi-resource edit window or displaying the multi-resource edit window while displaying the resource panel, which is not limited herein.

Each of the second resource options is used for indicating at least one resource. The multiple second resource options include at least one first resource option and the multiple second resource options may include all or some of the first resource options of the multiple first resource options, which is not limited herein.

203: determining multiple resources to be processed corresponding to at least one target option in response to a triggering operation on the at least one target option of the multiple second resource options.

At least one target option of the multiple second resource options is in a selected state, and the other resource options are in an unselected state. In the above step 202, each of the second resource options is in a selected state. In the step 203, the user may, according to actual needs, trigger the at least one target option to change from the unselected state to the selected state by the triggering operation (a selection operation, a deletion operation, etc.) on the at least one target option.

204: sending a processing request for a target resource pack to a server in response to a triggering operation on the sending control.

The target resource pack is generated based on the multiple resources to be processed, and the processing request is used for instructing to send the target resource pack to a live streamer client.

In the embodiments of the present disclosure, the resource pack may be an object with a real image such as a resource box (e.g., a gift box), a resource bag (e.g., a gift bag), or a concept without a real image, which is not limited herein.

In the embodiments of the present disclosure, the multi-resource edit window is displayed by the triggering operation on the resource pack control in the resource panel, and then the purpose of gifting the target resource pack corresponding to the multiple resources to be processed to the live streamer client is achieved by a triggering operation on at least one target option in the multi-resource edit window. Therefore, with the resource pack control added to the resource panel, the way of gifting multiple resources in the multi-resource edit window corresponding to the resource pack control is added, and the way of gifting multiple resources in combination is also achieved in the multi-resource edit window, so that different ways of resource gifting may be achieved in the resource panel, the problem that the combination gifting of multiple resources is also set up in the resource panel, which is prone to causing errors in the ways of resource gifting may be avoided, and the flexibility in resource gifting and the man-machine interaction performance are improved.

In some embodiments of the present disclosure, after the above step 203, the resource processing method provided in the embodiments of the present disclosure may further include step 205 as described below.

205: displaying a prompt message in the multi-resource edit window.

The prompt message is used for indicating at least one selected from the group of: the number of resources remaining to be accommodated by the resource pack to be generated; and value information for the multiple resources to be processed that have been accommodated by the resource pack to be generated.

The target resource pack is generated by triggering the sending control based on the resource pack to be generated.

The value information is used for indicating at least one selected from the group of: the total value of the multiple resources to be processed; and the total value of the multiple resources to be processed having exceeded the target value. The value information may also be used for indicating other contents, which is not limited herein.

The target value may be a preset value or an account balance.

The prompt message may further include other contents, which is not limited herein.

It can be understood that after each selection operation or deletion operation of a resource option by the user, the prompt message will change accordingly to better prompt the user.

In the embodiments of the present disclosure, the number of multiple resources to be processed is less than or equal to the maximum number of resources allowed to be accommodated in the resource pack to be generated. Therefore, by prompting the number of resources remaining to be accommodated in the resource pack to be generated, the user can be well prompted with the number of resources still available for selection, and can plan how to select the resources, so that the user experience can be improved.

In the embodiments of the present disclosure, based on the value information for the multiple resources to be processed that have been accommodated by the resource pack to be generated, the user can be well prompted with the value information of the multiple resources to be processed currently selected by himself/herself, so that the user can edit the final value information of the resource pack to be generated, and the user experience can be improved.

Optionally, the prompt message can be displayed in a region where the sending control is located in the multi-resource edit window, or can be displayed in a pop-up window. The location or manner of displaying the prompt message is not limited here.

In some embodiments of the present disclosure, the resource panel includes a tab bar region and an option display region, the tab bar region is used for displaying tabs of the resource panel, and the option display region is used for displaying the multiple first resource options, where the resource pack control is located in the tab bar region or the option display region.

The resource pack control may also be located in other regions of the resource panel. For example, the resource panel further includes a region that is different from the tab bar region and the option display region, and this region is used for displaying the resource pack control.

The embodiments of the present disclosure provide a variety of cases in which the resource pack control is displayed in different regions of the resource panel, which may be determined according to the actual situations and is not limited herein.

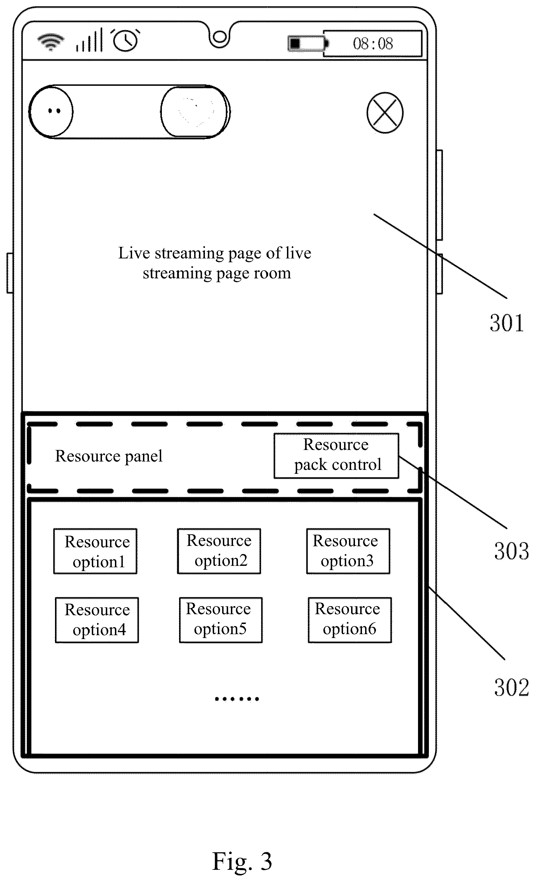

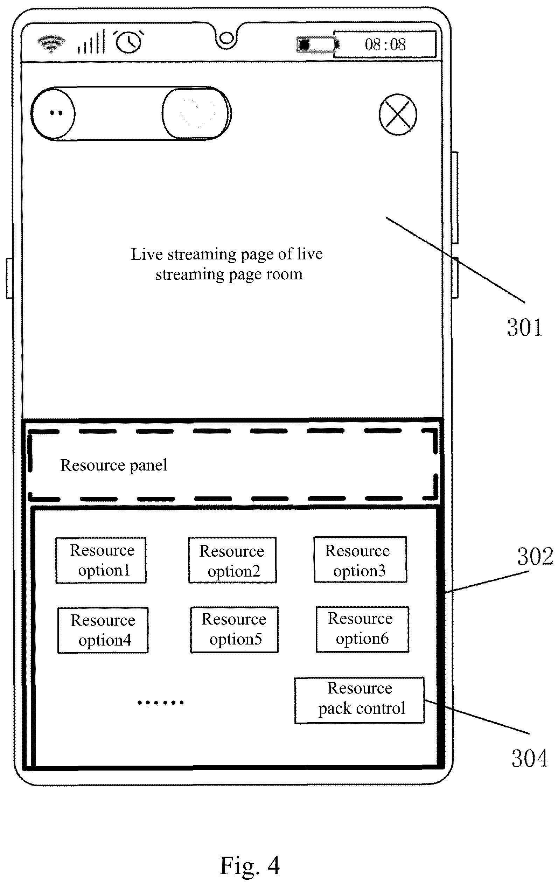

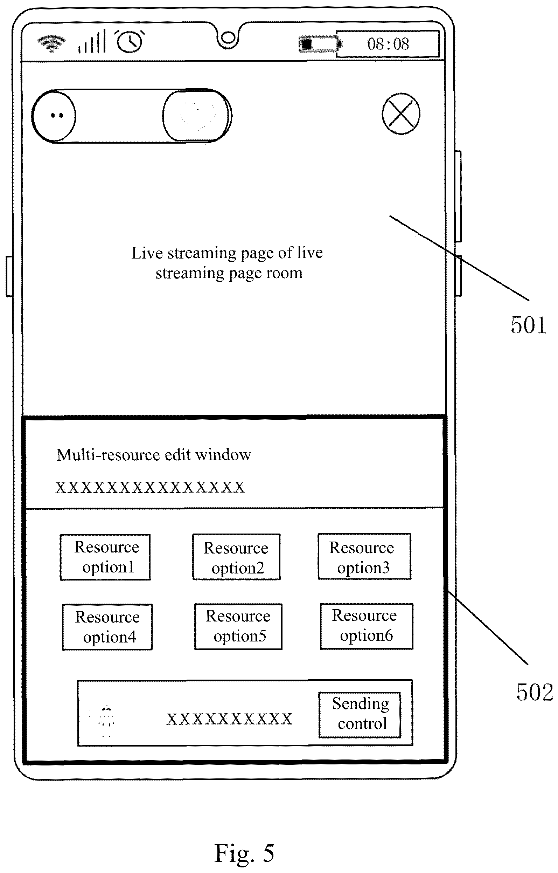

Exemplarily, as shown in Fig. 3 and Fig. 4, a sign "301" indicates a live-stream room page, a sign "302" indicates a resource panel, the resource panel includes a tab bar region corresponding to a solid line box and an option display region corresponding to a dashed line box, the tab bar region includes an ID of "resource panel", and the option display region includes "resource option 1", "resource option 2", "resource option 3", "resource option 4", "resource option 5", and "resource option 6". In Fig. 3, a "resource pack control" indicated with a sign "303" is displayed in the tab bar region, and in Fig. 4, a "resource packed control" indicated with a sign "304" is displayed in the tab bar region. By clicking on the resource pack control in Fig. 3 and Fig. 4, a multi-resource edit window shown in Fig. 5 is displayed. In Fig. 5, a sign "501" indicates a live-stream room page, and a sign "502" indicates a multi-resource edit window, which includes "resource option 1", "resource option 2", "resource option 3", "resource option 4", "resource option 5", "resource option 6", and a sending control. The user may click on any one of the resource options to add a resource indicated by this resource option to a resource pack to be generated.

In some embodiments of the present disclosure, the gift panel may contain a resource pack control or multiple resource pack controls (different resource pack controls correspond to different resource pack types), which may be determined according to the actual situation and is not limited herein.

In some embodiments of the present disclosure, before the above step 203, the resource processing method provided in the embodiments of the present disclosure may further include steps 206 and 207 as described below.

206: displaying multiple style options.

Each of the style options is used for indicating a resource pack style.

It can be understood that one resource pack style represents one resource pack type. In the embodiments of the present disclosure, multiple resource pack styles are provided for the user, so that the user may select a style of a resource pack to be gifted according to needs.

In some embodiments of the present disclosure, the multiple style options may be displayed on the resource panel. In this case, a style option is a resource pack control. The user may choose to gift different styles (different types) of resource packs by selecting different style options.

In some embodiments of the present disclosure, the multiple style options may be displayed in a multi-resource edit window. The user may choose to gift different styles (types) of resource packs by selecting different style options.

207: determining a resource pack style indicated by the target style option as a style of the target resource pack in response to a triggering operation on the target style option of the multiple style options.

The resource pack style includes at least one selected from the group of: a resource pack shape, a pattern on the resource pack, text on the resource pack, and a maximum number of resources allowed to be accommodated in the resource pack.

In the embodiments of the present disclosure, different resource pack styles are provided for the user, which brings convenience for the user to select the style of the resource pack to be gifted according to needs. As compared with a simple combination of resources, by constructing a resource pack and providing interaction solutions corresponding to the resource pack such as the selection of the resource pack style, the interaction and display of the resource pack are enriched, user's diversified needs are met, and the user experience is improved.

In some embodiments of the present disclosure, the multi-resource edit window further includes a multi-resource confirm control. Before the above step 204, the resource processing method provided in the embodiments of the present disclosure may further include steps 208 and 209 as below.

208: displaying the multi-resource edit window in response to a triggering operation on the multi-resource confirm control.

The step of displaying the multi-resource confirm window may refer to updating the multi-resource edit window displayed on the live-stream room page to the multi-resource confirm window.

The multi-resource confirm window contains the multiple resources to be processed and the sending control.

209: performing target processing on a first resource in response to a triggering operation on the multi-resource confirm window.

The target processing includes at least one selected from the group of:
adjusting an order in which the first resource is arranged among the multiple resources to be processed;
deleting the first resource from the multiple resources to be processed; and
adding the first resource to the multiple resource confirm window, and using the first resource as a resource to be processed.

The multi-resource confirm window is used to confirm whether the type and number and the order of resources included in the resource pack to be generated are consistent with the user's expectation. If they are not consistent, the user may adjust the type and number and the order of the resources included in the resource pack to be generated by the triggering operation on the multi-resource confirm window.

If the target processing includes adjusting the order of the first resource arranged among the multiple resources to be processed or the target processing includes deleting the first resource from the multiple resources to be processed, then the first resource is a resource that has already been added to the multi-resource confirm window (the resource pack to be generated) before the step 208, where the first resource is a second resource option corresponding to the first resource selected by the user from the multi-resource edit window and then the user triggers the addition of the first resource to the multi-resource confirm window.

If the target processing includes adding the first resource to the multi-resource confirm window and using the first resource as a resource to be processed, then the first resource is a resource that has not been added to the multi-resource confirm window before the step 208, and the user needs to select the second resource option corresponding to the first resource to trigger the addition of the first resource to the multi-resource confirm window.

It can be understood that the process of updating the multi-resource edit window to the multi-resource confirm window may be triggered by the triggering operation on the multi-resource confirm control in the multi-resource edit window; the user may, by the triggering operation on the multi-resource confirm window, adjust the order of the multiple resources to be processed, delete some resources in the multiple resources to be processed, or add some resources, or delete some resources first before adding some resources, or add some resources before deleting some resources, or the like.

In the embodiments of the present disclosure, after the user selects the multiple resources to be processed that are to be gifted, the user may also adjust the order of the multiple resources to be processed, i.e., adjusting a playing order of the respective display effects of the multiple resources to be processed, so that the user experience can be improved.

In the embodiments of the present disclosure, after selecting the multiple resources to be processed that are to be gifted, the user may delete or add some resources, so that he or she can adjust the multiple resources to be gifted according to the actual needs, and the user experience can be improved.

In some embodiments of the present disclosure, the target processing includes: adding a first resource to the multi-resource confirm window and using the first resource as a resource to be processed. The above step 209 may be specifically implemented by steps 209a and 209b as below.

209a: displaying the multi-resource edit window in response to a triggering operation on an adding control in the multi-resource confirm window.

The step of displaying the multi-resource edit window may specifically refer to updating the multi-resource confirm window displayed on the live-stream room page to the multi-resource edit window.

209b: adding the first resource to the multi-resource confirm window in response to a triggering operation on a resource option in the multi-resource edit window corresponding to the first resource.

The above step 209b specifically includes updating the multi-resource edit window displayed on the live-stream room page to the multi-resource confirm window that contains the first resource.

It can be understood that by the triggering operation on an adding control in the multi-resource confirm window, the process of switching the multi-resource confirm window to the multi-resource edit window is triggered, and the first resource is selected in the multi-resource edit window, so that the first resource can be added to the multi-resource confirm window, and the user can quickly select the resource to be gifted according to needs.

In some embodiments of the present disclosure, by the triggering operation on an adding control in the resource confirm window, a drop-down menu may be displayed in the multi-resource confirm window, and the drop-down menu includes multiple resource options (a first resource option or a second resource option); and the user may select a resource option corresponding to the first resource, and then add the first resource to the multi-resource confirm window, so that the user can quickly select a resource to be gifted according to needs.

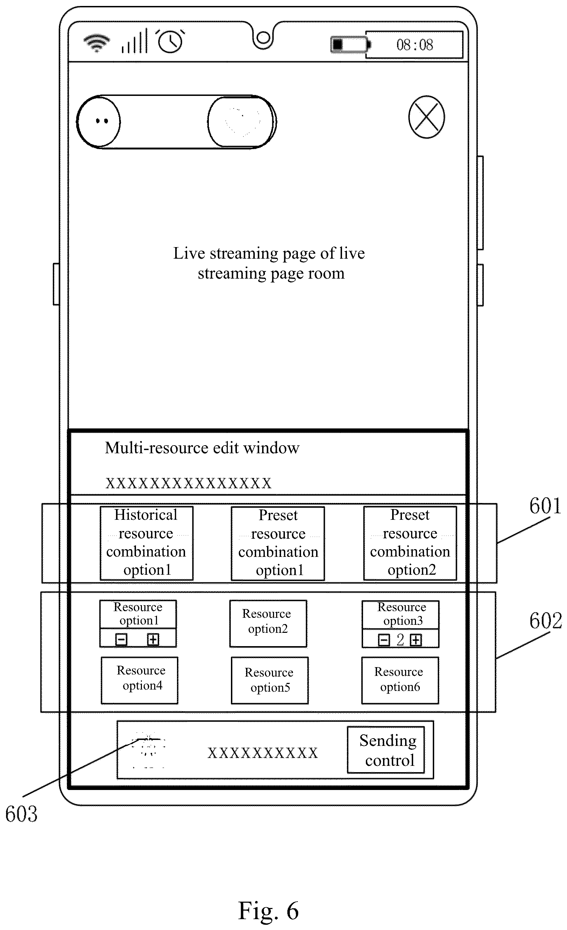

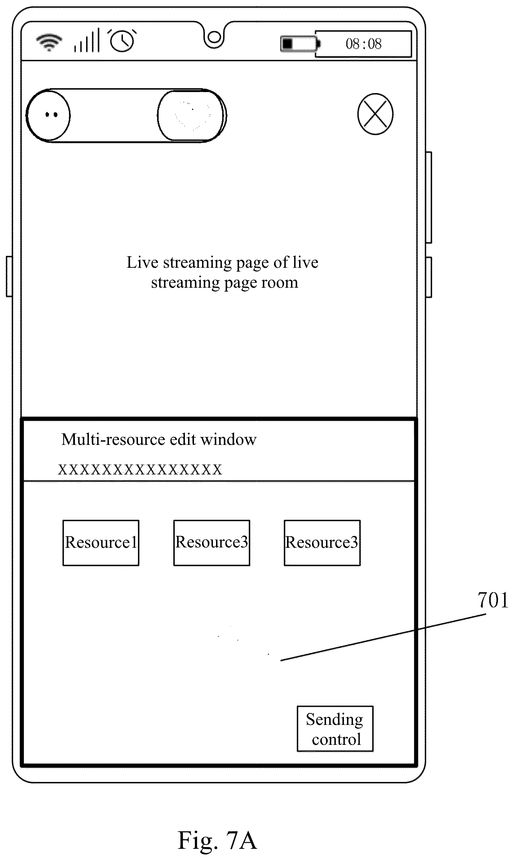

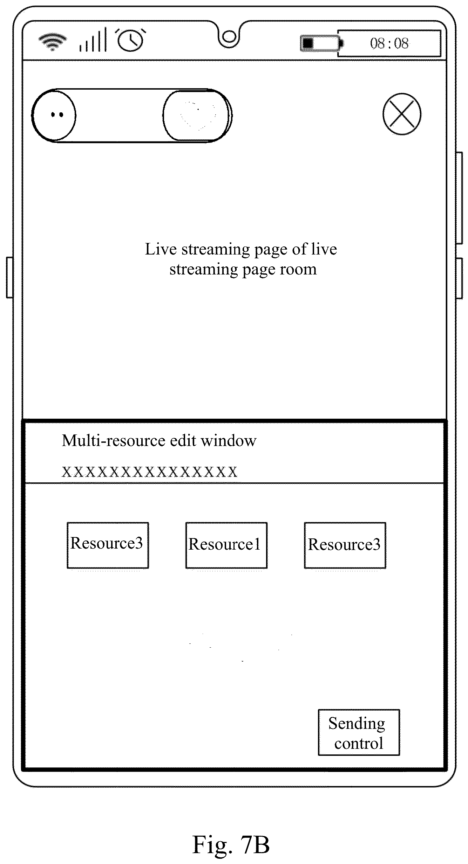

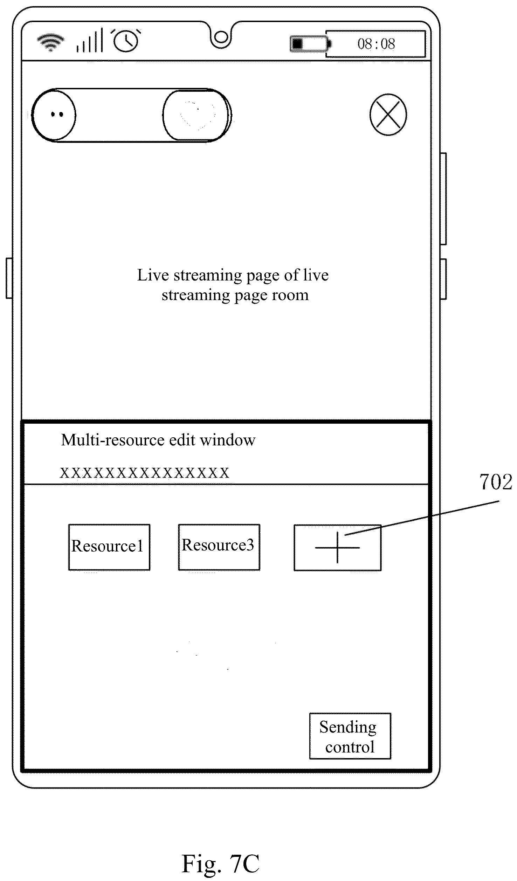

Exemplarily, Fig. 6 shows a multi-resource edit window including target type options. As shown in Fig. 6, a region indicated with a sign "601" is used for displaying the target type options. The target type options include "historical resource combination option 1", "preset resource combination option 1", "preset resource combination option 2", and the like. In this way, in the embodiments of the present disclosure, the present disclosure provides a solution that helps the user to quickly construct a resource pack based on the target type options, which brings convenience for the user to more efficiently obtain a resource pack that is of interest to him/her (and meets the user's expectation),without having to construct the resource pack or reconstruct the resource pack through cumbersome steps, and accordingly the user experience can be improved. A region indicated with a sign "602" is used for displaying a first resource option, including "resource option 1", "resource option 2", "resource option 3", "resource option 4", "resource option 5", and "resource option 6". A sign "603" indicates a multi-resource confirm control. The "resource option 1" and "resource option 3" are currently selected. When the user clicks on the multi-resource confirm control, a multi-resource confirm window is displayed as shown in Fig. 7A. As shown in Fig. 7A, the multi-resource confirm window contains "resource 1" corresponding to "resource option 1", two "resource 3" corresponding to "option resource 3", and an icon of a resource pack to be generated that is indicated with a sign "701", and a sending control, where the resource pack to be generated is allowed to accommodate up to three resources. The user performs a triggering operation to adjust the order of the "resource 1" and the "resource 3" located in the middle such that a multi-resource confirm window shown in Fig. 7B is displayed. In this way, in the embodiments of the present disclosure, a solution that helps the user to adjust the order of the respective resources in the resource pack is provided, which brings convenience for the user to obtain the resource pack that is of interest to him/her (meeting the user's expectation) more efficiently without having to reconstruct the resource pack, and can improve the user experience. The user performs a triggering operation to delete "resource 3" located in the middle such that a multi-resource confirm window as shown in Fig. 7C is displayed. The multi-resource confirm window in Fig. 7C contains an add control indicated with a sign "702". In this way, in the embodiments the present disclosure, a solution that helps the user to adjust the resource combination way of the resource pack (the type and number of resources included in the resource pack) is provided, which brings convenience for the user to obtain the resource pack that is of interest to him/her (meeting the user's expectation) more efficiently without having to reconstruct the resource pack, and can improve the user experience.

In some embodiments of the present disclosure, before the step 204 described above, the resource processing method provided in the embodiments of the present disclosure may further include step 210 described below.

210: in response to a triggering operation on the sending control, displaying a packing dynamic effect for packing the multiple resources to be processed and generating the target resource pack.

In some embodiments of the present disclosure, the packing dynamic effect may include a dynamic effect in which the multiple resources to be processed sequentially enter the target resource pack, and the target resource pack is packaged. In this way, on the one hand, the packing dynamic effect in which the multiple resources to be processed sequentially enter the target resource pack can prompt the user as to which resources the multiple resources to be processed are sequentially; and on the other hand, the packing dynamic effect enhances the interaction with the user and brings the user a real experience of sequentially loading the respective resources to be processed into the target resource pack and packaging the target resource pack, so that the user experience can be improved.

In some embodiments of the present disclosure, the packing dynamic effect may include a dynamic effect in which the multiple resources to be processed simultaneously enter the target resource pack, and the target resource pack is packaged; and the packing dynamic effect may further include other dynamic effect contents, which is not limited herein.

The processing request is also used for requesting to play combination display dynamic effect corresponding to the target resource pack in the respective clients that currently display the live-stream room page, and combination display dynamic effect includes an unpacking dynamic effect of the target resource pack and display dynamic effects of the respective resources to be processed.

The respective clients currently displaying the live-stream room page include the live streamer client of the live-stream room and the respective viewer clients of the live-stream room. The respective viewer clients of the live-stream room include a client that currently generates the target resource pack (i.e., the client that gifts the target resource pack to the live streamer client).

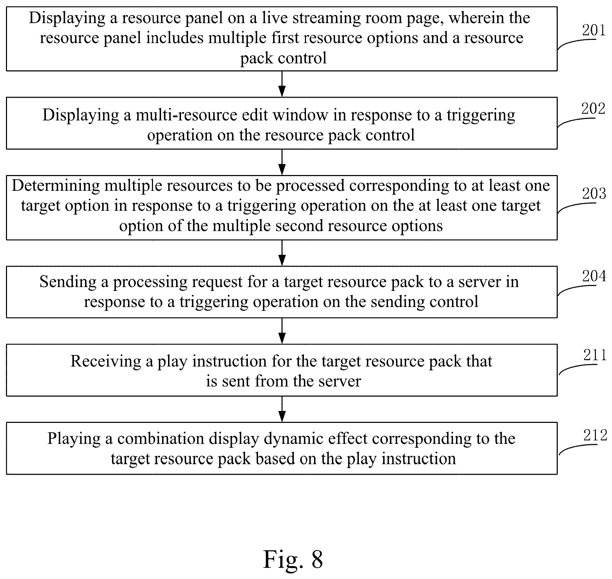

In some embodiments of the present disclosure, as shown in Fig. 8, after the above step 204, the resource processing method provided in the embodiments of the present disclosure may further include steps 211 and 212 as below.

211: receiving a play instruction for the target resource pack that is sent from the server.

The play instruction is generated by the server upon the processing request.

The server receives the processing request for the target resource pack from a sending client, and then verifies, based on the processing request, whether the user of the sending client has the ability to gift the respective resources to be processed in the target resource pack. If it is verified that the user of the sending client has the ability to gift the respective resources to be processed in the target resource pack, then information corresponding to the target resource pack is obtained from a database, and the information corresponding to the target resource pack is sent to the respective playing clients. After receiving the play instruction, the respective playing clients download the information corresponding to the target resource pack from the server. The information corresponding to the target resource pack includes the combination display dynamic effect.

212: playing a combination display dynamic effect corresponding to the target resource pack on the basis of the play instruction.

The combination display dynamic effect includes an unpacking dynamic effect of the target resource pack and display dynamic effects of the respective resources to be processed.

In the embodiments of the present disclosure, the play instruction of the target resource pack that is sent from the server is received, and the combination display dynamic effect corresponding to the target resource pack is played, where the combination display dynamic effect includes an unpacking dynamic effect of the target resource pack and display dynamic effects of the respective resources to be processed. Therefore, in the embodiments of the present disclosure, the way of multi-resource combination gifting is added, the user can select the type and number of the resources to be gifted on his/her own; as the playing effect of the combination display dynamic effect of the target resource pack is added, by playing the unpacking dynamic effect of the target resource pack, it is effectively prompted that the multiple resources to be processed are gifted in the form of a combination; and by playing the display dynamic effects of the respective resources to be processed, the respective resources to be processed that are gifted are effectively displayed. Moreover, according to the solution of the present disclosure, in the process of playing the combination display dynamic effect, the display dynamic effects of the respective resources to be processed can be avoided being interrupted by the display dynamic effects of resources gifted by other users, therefore, the diversity and effectiveness of the interaction in the live-stream room can be improved, and the man-machine interaction performance can be further improved.

In the embodiments of the present disclosure, one first resource option is in a selected state, meaning that the first resource option may be selected one time or multiple times. If one first resource option is selected once, the selected first resource option corresponds to one resource; if a first resource option is selected multiple times, the selected first resource option corresponds to multiple resources, and the multiple resources are the same. Therefore, if the at least one target option is a first resource option, the multiple resources to be processed may be multiple identical resources.

In some embodiments of the present disclosure, the multiple second resource options include, in addition to the at least one first resource option, a target type option for indicating multiple resources having a preset order; the target type option includes at least one selected from the group of: a historical resource combination option, and a preset resource combination option; where the at least one target option includes a first target option, the first target option being the target type option.

The historical resource combination option is a combination of resources in a resource pack that the user has gifted in a live-stream room (the current live-stream room or another live-stream room), and is generated based on the historical resource gifting of the user.

The preset resource combination option is a preset resource combination provided by the system for the user.

Optionally, the target type option may be selected only one or multiple times, and/or the at least one target option includes only one target type option or multiple target type options, which is not limited herein.

In the embodiments of the present disclosure, the multiple second resource options include the target type option, so that if the at least one target option includes a target type option, the multiple resources to be processed may be multiple resources corresponding to the one target type option. By providing the user with the target type option, the optionality and convenience of gifting multiple resources at the same time by the user are improved, and the user experience is improved.

In some embodiments of the present disclosure, the above step 212 may be specifically implemented through step 212a or step 212b as below.

212a: in response to meeting a preset play condition, rendering the unpacking dynamic effect of the target resource pack via a first video layer in real time, and playing the preset display dynamic effects of the respective resources to be processed sequentially via a second video layer in a target order.

212b: in response to not meeting a preset play condition, playing the preset unpacking dynamic effect of the target resource pack via the second video layer, and playing the preset display dynamic effects of the respective resources to be processed sequentially in a target order.

The first video layer is located above the second video layer, and the second video layer is located above a live-stream room video layer.

Optionally, the target order may be a randomly generated display order, and the target order may also be an order in which the respective resources to be processed are arranged in the target resource pack, which is not limited herein.

Meeting the preset play condition means having the ability to render the unpacking dynamic effect of the target resource pack via the first video layer in real time. Considering the lack of performance of a low-end machine, the client will downgrade to play an underlying video if the playing of a front-end page layer times out or fails (i.e., does not support the preset playing capability), i.e., the content corresponding to the above step 802b is performed.

The first video layer may be the front-end page layer of the client, and the second video layer may be a video resource layer (e.g., a video gift layer) of the client.

The front-end page layer may be implemented based on the new Lynx technology, which may also be referred to as a front-end Lynx page layer.

In the embodiments of the present disclosure, the video layer of the client supporting the preset playing capability is divided into three layers, which are a live-stream room video layer, a video resource layer, and a front-end page layer. The live room video layer is used for displaying a live-stream video of the live-stream room; the video resource layer is used for displaying display dynamic effects of the respective resources gifted by viewers to the live streamer (including the display dynamic effects of the respective resources to be processed in the target resource pack in the embodiments of the present disclosure); and the front-end page layer is used for rendering the unpacking dynamic effect of the target resource pack in real time.

In the embodiments of the present disclosure, the video layer of the client that does not support preset playing capability is divided into two layers, which are a live-stream video layer and a video resource layer. The live-stream room video layer is used for displaying a live-stream video of the live-stream room; the video resource layer is used for displaying display dynamic effects of the respective resources gifted by the viewers to the live streamer (including the display dynamic effects of the respective resources to be processed in the target resource pack in the embodiments of the present disclosure) and for displaying the preset unpacking dynamic effect of the target resource pack.

In the embodiments of the present disclosure, the front-end page layer is equivalent to a web page end (or some other lightweight web display architectures), actually, the client provides a container or provides a technical underlying support for the web page end, and then makes it possible to display the front-end page layer on top of the video resource layer, thus realizing the function of real-time rendering of the content in the combination display dynamic effect that needs to be rendered in real time.

In the embodiments of the present disclosure, the front-end page layer is selected for realizing the function of real-time rendering of the content in the combination display dynamic effect that needs to be rendered in real time, this is because the front-end page layer occupies a smaller volume when it is implemented, puts less pressure on the performance of the client, and can improve the efficiency in realizing the function of real-time rendering of the content in the combination display dynamic effect that needs to be rendered in real time.

In some embodiments of this application, the first target option is used for indicating multiple first resources having a first order, and the multiple resources to be processed include the multiple first resources arranged in the first order.

The step of playing the preset display dynamic effects of the respective resources to be processed sequentially in a target order specifically includes playing the preset display dynamic effects of the respective first resources sequentially in the first order.

In the embodiments of the present disclosure, after the first target option (the target type option) is selected, the multiple first resources having the first order that are indicated by the first target option are added to a resource pack to be generated (the multi-resource confirm window); the order of the multiple first resources in the resource pack to be generated is maintained as the first order; after a target resource pack is generated from the multiple first resources in the first order, the client plays the combination display dynamic effect of the target resource pack, and displays the preset display dynamic effects of the respective first resources sequentially in the first order. In this way, in the embodiments of the present disclosure, during the playing of the combination display dynamic effect, the preset display dynamic effects of the respective resources to be processed can be displayed sequentially in the order of the respective resources to be generated in the resource pack, so that before the target resource pack is generated, the user can estimate the specific display situation of the combination display dynamic effect, and can adjust the final combination display dynamic effect by adjusting the order of the respective resources to be processed according to needs.

In some embodiments of the present disclosure, the above step 212 may further include step 212c as below.

802c: in response to meeting the preset play condition, before rendering the unpacking dynamic effect of the target resource pack via the first video layer in real time, rendering a display dynamic effect of a text message corresponding to the target resource pack via the first video layer in real time.

The text message may include a user ID corresponding to the client that generates the target resource pack and/or a user ID corresponding to the live streamer client of the live-stream room. A postcard may further include other contents, such as wishes of the user of the sending client (i.e., the client that generates the target resource pack) to the live streamer which may be determined according to actual situations, which is not limited herein.

The user ID may be a user name, a user avatar, etc., which is not limited herein.

The text message may be displayed in the form of a postcard or a greeting card, etc.

In the embodiments of the present disclosure, by adding a postcard display dynamic effect in the combination display dynamic effect, the display mode of the combination display dynamic effect is increased, which makes the live-stream room more interactive. In addition, the way of sending gifts to each other among friends in real life is simulated, which makes the way of gifting resources in the live-stream room more mainstream, and can better enhance the emotions that the user needs to express and improve the user experience.

In some embodiments of the present disclosure, the above step 212 may further include step 212d as below.

212d: in response to meeting a preset play condition, rendering display dynamic effects of IDs corresponding to the respective resources to be processed via the first video layer in real time after rendering the unpacking dynamic effect of the target resource pack via the first video layer in real time.

The ID corresponding to each resource to be processed is used for indicating the resource to be processed. The ID corresponding to each resource to be processed may be an icon, a name, and the like of each resource to be processed, which is not limited herein.

It can be understood that the above step 212d refers to rendering the display dynamic effects of multiple IDs via the first video layer in real time, and each ID is used for indicating a resource to be processed.

In the embodiments of the present disclosure, the step of rendering the display dynamic effects of the IDs corresponding to the respective resources to be processed via the first video layer in real time can well prompt the user that the multiple resources to be processed are a combination of gifting resources, that the multiple resources to be processed are multiple resources gifted by the same user at the same time, and that the multiple resources to be processed are not resources gifted by different users, so that the combination display dynamic effect can be better displayed, and the user experience can be improved.

In some embodiments of the present disclosure, the above step 212d may include steps 212d1 and 212d2 as below.

212d1: rendering a dynamic effect of moving the IDs corresponding to the respective resources to be processed from the target resource pack to a preset position via the first video layer in real time.

The preset position may be an upper-right corner region of the display space (e.g., an effect playing space) in the first video layer, or other regions, which is not limited herein.

It can be understood that before sequentially playing the preset display dynamic effects of the respective resources to be processed via the second video layer, the dynamic effect of moving the IDs corresponding to the respective resources to be processed from the target resource pack to the preset position is rendered via the first video layer in real time (e.g., the dynamic effect that the IDs corresponding to the respective resources to be processed fly out from the target resource pack, and fly to the preset position).

212d2: rendering a dynamic effect of updating an ID of the first resource to be processed from a first display state to a second display state in response to playing a preset display dynamic effect of the first resource to be processed via the second video layer.

The first resource to be processed is any one of the multiple resources to be processed.

The IDs of the respective resources to be processed may have the same or different first display state, and may have the same or different second display state, which may be determined according to the actual situation, and is not limited herein.

It can be understood that for each of the multiple resources to be processed (illustrated by the first resource to be processed as an example), before the preset display dynamic effect of the first resource to be processed is played via the second video layer, the ID of the first resource to be processed is rendered via the first video layer in real time by means of a first display dynamic; and in response to that the preset display dynamic effect of the first resource to be processed is played via the second video layer, the ID of the first resource to be processed is rendered via the first video layer in real time by means of a second display dynamic, and thus, with changes in the display dynamics of the ID of the first resource to be processed, the user can be better prompted that which resource to be processed the preset display dynamic effect of the resource to be processed currently displayed belongs to, and to what progress the preset display dynamic effects of the current multiple resources to be processed are displayed to, and other information, and accordingly the user experience can be improved.

Example 1: assuming that the resource pack includes 3 resources, respectively resource A, resource B, and resource C, the combination display dynamic effect includes the following parts.

Dynamic effect part 1: a display dynamic effect of real-time rendering of a postcard (real-time rendering of the user ID corresponding to the sending client and the user ID corresponding to the live streamer client of the live-stream room) that comes with the resource pack.

Dynamic effect part 2: an unpacking dynamic effect of the resource pack.

Dynamic effect part 3: a flying-out dynamic effect of icons corresponding to the respective resources in the resource pack, and a dynamic effect of the icons corresponding to the respective resources flying to the upper-right corner of the effect playing space, where the icons corresponding to the respective resources remain displayed at the upper-right corner of the effect playing space, and the playing progress of the dynamic effect of the resource that is displayed currently is indicated in real time until the end of playing of the combination display dynamic effect.

Dynamic effect part 4: a preset display dynamic effect of the resource A.

Dynamic effect part 5: a preset display dynamic effect of the resource B.

Dynamic effect part 6: a preset display dynamic effect of the resource C.

The above-described dynamic effect part 1, dynamic effect part 2, and dynamic effect part 3 are all implemented via the front-end page layer, and the above-described dynamic effect part 4, dynamic effect part 5, and dynamic effect part 6 are all implemented via the resource video layer.

The front-end page layer plays the above-mentioned dynamic effect part 1, dynamic effect part 2, and flying-out dynamic effect of the icons corresponding to the respective resources in the resource pack and dynamic effect of the icons corresponding to the respective resources flying to the upper-right corner of the effect playing space in the dynamic effect part 3, which may be referred to as an initialization dynamic effect.

In the embodiments of the present disclosure, the above dynamic effect part 1 and dynamic effect part 2 are a mixture of a 3D model animation and a video animation. The above-described dynamic effect part 3 is a mixture of a video animation and a Lottie animation, and the above-described dynamic effect part 4, dynamic effect part 5 and dynamic effect part 6 are implemented by CSS animations.

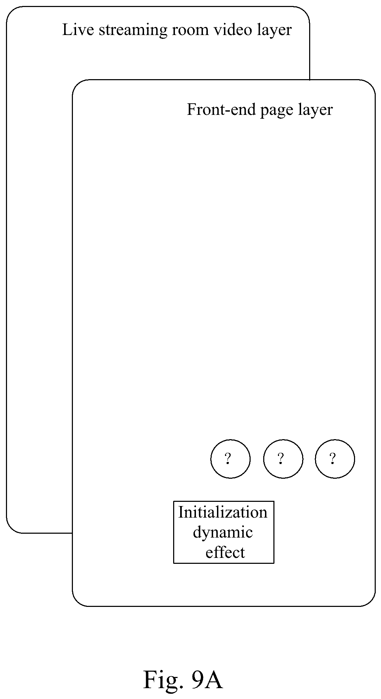

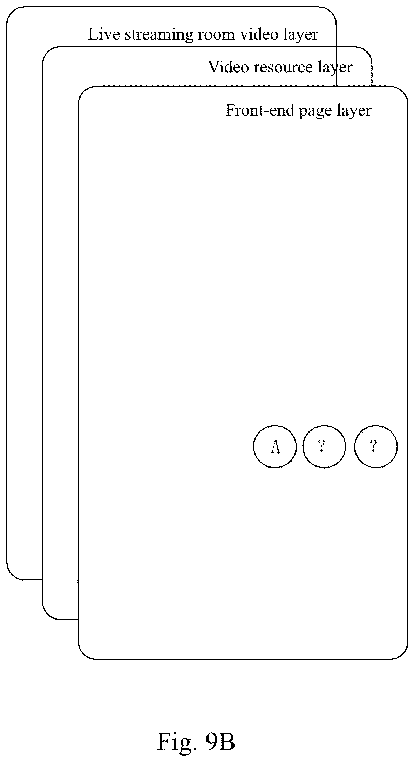

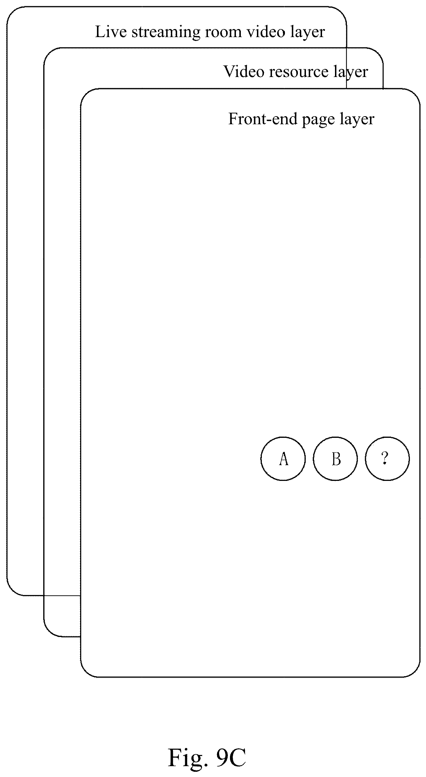

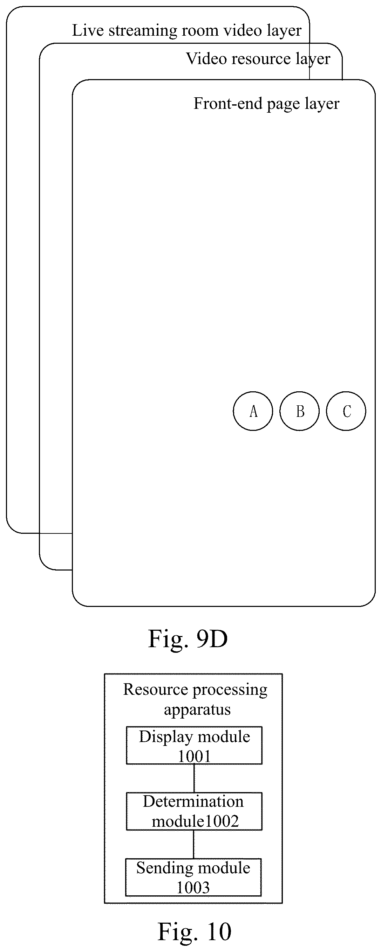

Example 2 follows up on the above example 1. The playing process of the combination display dynamic effect over time is shown sequentially in Fig. 9A to Fig. 9D. In Fig. 9A, a front-end page layer plays the initialization dynamic effect; in Fig. 9B, a front-end page layer displays an icon of resource A, and a resource video layer plays a preset display dynamic effect of the resource A; in Fig. 9C, a front-end page layer displays an icon of resource B, and a resource video layer plays a preset display dynamic effect of the resource B; and in Fig. 9D, a front-end page layer displays an icon of resource C, and a resource video layer plays a preset display dynamic effect of the resource C.

In the embodiments of the present disclosure, the above-mentioned combination display dynamic effect is implemented via communication between the client, the resource video layer and the front-end page layer. The specific communication events include:
1. After the playing client obtains information of the combination display dynamic effect (data required for dynamic rendering of the front-end page layer and the preset display dynamic effects of the respective resources to be processed displayed in the video resource layer) based on a play instruction, the client sends the data required for the dynamic rendering to the front-end page layer and notifies the front-end page of the initialization, including sending the viewer information of the client (sending the user ID corresponding to the client), the live streamer information (the user ID corresponding to the live streamer client of the live-stream room) and the information of resource A, resource B and resource C that need to be played; the client sends the preset display dynamic effects of the respective resources to be processed to the video resource layer.
2. The front-end page layer plays the initialization dynamic effect and notifies the resource video layer that the initialization has been successful and it is ready to start playing gifts after the initialization dynamic effect is finished.
3. The front-end page layer displays an icon of the resource A, and then notifies the resource video layer to play the preset display dynamic effect of the resource A.
4. The resource video layer notifies the front-end page layer after it finishes playing the preset display dynamic effect of the resource A.
5. The front-end page layer displays an icon of the resource B, and then notifies the resource video layer to play the preset display dynamic effect of the resource B.
6. The resource video layer notifies the front-end page layer after it finishes playing the preset display dynamic effect of the resource B.
7. The front-end page layer displays an icon of the resource C, and then notifies the resource video layer to play the preset display dynamic effect of the resource C.
8. The resource video layer finishes playing the preset display dynamic effect of the resource C, and notifies the client of the finishing of playing of the combination display dynamic effect.

In the above specific communication events, a Universally Unique Identifier (UUID) of the target resource pack (which may also be the UUID of the combination display dynamic effect of the target resource pack played at that time) may also be carried, such that the communication events between the client, the resource video layer, and the front-end page layer are for that target resource pack, thus avoiding errors in playing of the combination display dynamic effect (e.g., the display dynamic effects of other resources or resource packs are played during the playing of the combination display dynamic effect of the target resource pack).

Fig. 10 is a structural block diagram of a resource processing apparatus according to an embodiment of the present disclosure. As shown in Fig. 10, the resource processing apparatus includes:

A display module 1001, which is configured to display a resource panel on a live-stream room page, where the resource panel contains multiple first resource options and a resource pack control; the display module 1001 is further configured to display a multi-resource edit window in response to a triggering operation on the resource pack control, wherein the multi-resource edit window includes multiple second resource options and a sending control, and the multiple second resource options includes at least one first resource option; a determination module 1002, which is configured to determine multiple resources to be processed corresponding to at least one target option in response to a triggering operation on the at least one target option of the multiple second resource options; and a sending module 1003, which is configured to send a processing request for a target resource pack to a server in response to a triggering operation on the sending control, where the target resource pack is generated based on the multiple resources to be processed, and the processing request is used for instructing to send the target resource pack to a live streamer client.

In some embodiments of the present disclosure, the apparatus further includes an execution module; the multi-resource edit window further includes a multi-resource confirm control; the display module 1001 is further configured to display the multi-resource confirm window in response to a triggering operation on the multi-resource confirm control before the processing request for the target resource pack is sent to the server in response to the triggering operation on the sending control, wherein the multi-resource confirm window includes the multiple resources to be processed and the sending control; the execution module is configured to perform target processing on the first resource in response to a triggering operation on the multi-resource confirm window; where the target processing includes at least one selected from the group of: adjusting an order in which the first resource is arranged among the multiple resources to be processed; deleting the first resource from the multiple resources to be processed; adding the first resource to the multiple resource confirm window, and using the first resource as a resource to be processed.

In some embodiments of the present disclosure, the target processing includes: adding the first resource to the multi-resource confirm window and using the first resource as a resource to be processed; the execution module is specifically configured to display a multi-resource edit window in response to a triggered operation on an adding control in the multi-resource confirm window, and add the first resource to the multi-resource confirm window in response to a triggering operation on a resource option in the multi-resource edit window corresponding to the first resource.

In some embodiments of the present disclosure, the display module 1001 is further configured to display a prompt message in the multi-resource edit window after the multiple resources to be processed corresponding to at least one target option are determined in response to the triggering operation on the at least one target option of the multiple second resource options. The prompt message is used for indicating at least one selected from the group of: the number of resources remaining to be accommodated by a resource pack to be generated; and value information for the multiple resources to be processed that have been accommodated by the resource pack to be generated; where the value information is used for indicating at least one selected from the group of: the total value of the multiple resources to be processed; and the total value of the multiple resources to be processed having exceeded a target value.

In some embodiments of the present disclosure, the resource panel includes a tab bar region and an option display region, the tab bar region is used for displaying tabs of the resource panel, and the option display region is used for displaying the multiple first resource options; and the resource pack control is located in the tab bar region or the option display region.

In some embodiments of the present disclosure, the display module 1001 is further configured to display multiple style options before the multiple resources to be processed corresponding to at least one target option are determined in response to the triggering operation on the at least one target option of the multiple second resource options, each style option being used for indicating a resource pack style; the determination module 1002 is configured to determine a resource pack style indicated by the target style option as a style of the target resource pack in response to a triggering operation on the target style option of the multiple style options; where the resource pack style includes at least one selected from the group of: a resource pack shape, a pattern on the resource pack, text on the resource pack, and a maximum number of resources allowed in the resource pack.

In some embodiments of the present disclosure, the apparatus further includes a display module and a generation module; the display module is configured to display a packing dynamic effect of packing the multiple resources to be processed before the processing request for the target resource pack is sent to the server; the generation module is configured to generate the target resource pack; where the packing dynamic effect includes a dynamic effect in which the multiple resources to be processed sequentially enter the target resource pack and the target resource pack is packaged.

In some embodiments of the present disclosure, the apparatus further includes a receiving module and a playing module; the receiving module is configured to receive a play instruction for the target resource pack that is sent from the server after the processing request for the target resource pack is sent to the server in response to the triggering operation on the sending control, the play instruction being generated by the server upon the processing request; the playing module is configured to play a combination display dynamic effect corresponding to the target resource pack on the basis of the play instruction, the combination display dynamic effect including an unpacking dynamic effect of the target resource pack and display dynamic effects of the respective resources to be processed.

In some embodiments of the present disclosure, the playing module is specifically configured to, in response to meeting a preset play condition, render the unpacking dynamic effect of the target resource pack via a first video layer in real time, and play preset display dynamic effects of the respective resources to be processed in a target order via a second video layer; otherwise, play a preset unpacking dynamic effect of the target resource pack via the second video layer, and play the preset display dynamic effects of the respective resources to be processed in a target order; where the first video layer is located above the second video layer, the second video layer is located above the live-stream room video layer, and the target order is an order in which the respective resources to be processed are arranged in the target resource pack.

In some embodiments of the present disclosure, the multiple second resource options include a target type option for indicating multiple resources having a preset order; the target type option includes at least one selected from the group of: a historical resource combination option, and a preset resource combination option; where the at least one target option includes a first target option, the first target option is served as the target type option; the first target option is used for indicating multiple first resources having a first order, and the multiple resources to be processed include the multiple first resources arranged in the first order; and the playing module is specifically configured to sequentially play preset display dynamic effects of the respective first resources in the first order.

In some embodiments of the present disclosure, the playing module is specifically configured to, in response to meeting the preset play condition, render a display dynamic effect of a postcard corresponding to the target resource pack via the first video layer in real time before the unpacking dynamic effect of the target resource pack is rendered via the first video layer in real time; where the postcard includes a user ID corresponding to the client that generates the target resource pack and/or a user ID corresponding to the live streamer client.

In some embodiments of the present disclosure, the playing module is specifically configured to render the display dynamic effects of IDs corresponding to the respective resources to be processed via the first video layer in real time after the unpacking dynamic effect of the target resource pack is rendered via the first video layer in real time in response to meeting the preset play condition.

In some embodiments of the present disclosure, the playing module is specifically configured to render a dynamic effect of moving the IDs corresponding to the respective resources to be processed from the target resource pack to a preset position via the first video layer in real time; and render a dynamic effect of updating an ID of the first resource to be processed from a first display state to a second display state in response to playing a preset display dynamic effect of the first resource to be processed via the second video layer.

In embodiments of the present disclosure, the respective modules may implement the resource processing methods of the foregoing method embodiments, with the same technical effects. To avoid repetition, details are not further described herein.

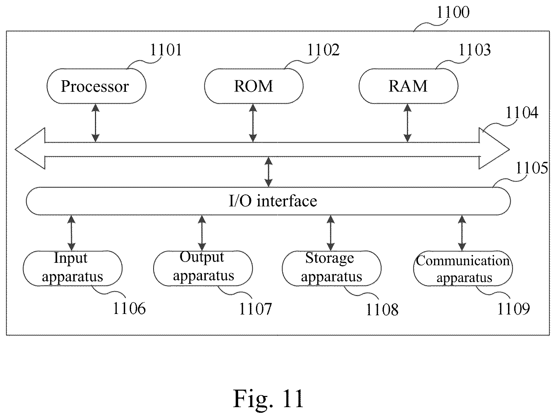

Fig. 11 is a schematic structural diagram of an electronic device according to an embodiment of the present disclosure, for exemplary illustration of an electronic device that implements any of the resource processing methods in the embodiments of the present disclosure, and should not be construed as a specific limitation of the embodiments of the present disclosure.

As shown in Fig. 11, the electronic device 1100 may include a processor 1101 (e.g., a central processor and a graphics processor) that may perform various appropriate actions and processes based on a program stored in a read-only memory (ROM) 1102 or loaded from a storage apparatus 1108 into a random-access memory (RAM) 1103 according to the embodiments of the present disclosure. Also stored in the RAM 1103 are various programs and data necessary for operations of the terminal device 1100. The processor 1101, the ROM 1102, and the RAM 1103 are interconnected by means of a bus 1104. An input/output (I/O) interface 1105 is also connected to the bus 1104.

Typically, the following apparatuses may be connected to the I/O interface 1105: an input apparatus 1106 including, for example, a touch screen, a touch pad, a keyboard, a mouse, a camera, a microphone, an accelerometer, a gyroscope, and the like; an output apparatus 1107 including, for example, a liquid crystal display (LCD), a loudspeaker, a vibrator, and the like; the storage apparatus 1108 including, for example, a magnetic tape, and a hard disk,; and a communication apparatus 1109. The communication apparatus 1109 may allow the electronic device 1100 to communicate wirelessly or wiredly with other devices to exchange data. While the electronic device 1100 with various apparatuses is illustrated, it should be understood that it is not required to implement or have all of the illustrated apparatuses. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program code for performing the methods shown in the flowcharts. In such embodiments, the computer program may be downloaded online through the communication apparatus 1109 and installed, or may be installed from the storage apparatus 1108, or may be installed from the ROM 1102. When the computer program is executed by the processor 1101, the functions defined in any resource processing methods provided in the embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program code. The data signal propagating in such a manner may take multiple forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementations, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The computer-readable medium described above may be contained in the electronic device described above; or it may stand alone and not be assembled into that electronic device.

The computer-readable medium carries one or more programs. When the one or more programs are executed by the electronic device, the electronic device is caused to display a resource panel on a live-stream room page, the resource panel containing multiple first resource options and a resource pack control; display a multi-resource edit window in response to a triggering operation on the resource pack control, the multi-resource edit window containing multiple second resource options and a sending control, and the multiple second resource options including at least one first resource option; determine multiple resources to be processed corresponding to at least one target option in response to a triggering operation on the at least one target option of the multiple second resource options; and send a processing request for a target resource pack to a sever in response to a triggering operation on the sending control, where the target resource pack is generated based on the multiple resources to be processed, and the processing request is used for instructing to send the target resource pack to a live streamer client.

In embodiments of the present disclosure, the computer program code for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the computer, partly on the computer, as a stand-alone software packet, partly on the computer and partly on a remote computer, or entirely on the remote computer or server side. In the scenario related to the remote computer, the remote computer may be connected to the computer through any type of network, including a local area network (LAN) or a wide area network (WAN), or the connection may be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of code, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the computer-readable medium may be a tangible medium that may include or store a program for use by or in combination with an instruction execution system, apparatus or device. The computer-readable medium may be a computer-readable signal medium or a computer-readable storage medium. The computer-readable medium includes, but is not limited to, an electrical, magnetic, optical, electromagnetic, infrared, or semi-conductive system, apparatus or device, or any suitable combination of the foregoing. More specific examples of computer-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

The above description only relates to some preferred embodiments of the present disclosure and explanations of the technical principles applied. Technicians in this field should understand that the scope referred to in this disclosure is not limited to technical solutions formed by specific combinations of the above technical features, and should also cover other technical solutions formed by arbitrary combinations of the above technical features or their equivalent features without departing from the above disclosed concept. For example, a technical solution formed by replacing the above features with (but not limited to) technical features with similar functions disclosed in this disclosure.

In addition, although the operations are depicted in a specific order, this should not be understood as requiring these operations to be executed in the specific order shown or in a sequential order. Under certain circumstances, multitasking and parallel processing may be advantageous. Similarly, although several specific implementation details are included in the above discussion, they should not be interpreted as limiting the scope of this disclosure. Certain features described in the context of individual embodiments can also be combined and implemented in a single embodiment. On the contrary, various features described in the context of a single embodiment can also be implemented individually or in any suitable sub combination in multiple embodiments.

Although the subject matter has been described using language specific to structural features and/or method logic actions, it should be understood that the subject matter defined in the appended claims is not necessarily limited to the specific features or actions described above. On the contrary, the specific features and actions described above are merely exemplary forms of implementing the claims.

## Claims

1. A resource processing method, comprising:
displaying a resource panel on a live-stream room page, wherein the resource panel comprises multiple first resource options and a resource pack control;
displaying a multi-resource edit window in response to a triggering operation on the resource pack control, wherein the multi-resource edit window comprises multiple second resource options and a sending control, and the multiple second resource options comprise at least one first resource option;
determining multiple resources to be processed corresponding to at least one target option in response to a triggering operation on the at least one target option of the multiple second resource options; and
sending a processing request for a target resource pack to a server in response to a triggering operation on the sending control, wherein the target resource pack is generated based on the multiple resources to be processed, and the processing request is used for instructing to send the target resource pack to a live streamer client.

2. The method according to claim 1, wherein the multi-resource edit window further comprises a multi-resource confirm control, and wherein before sending a processing request for a target resource pack to a server in response to a triggering operation on the sending control, the method further comprises:
displaying a multi-resource confirm window in response to a triggering operation on the multi-resource confirm control, wherein the multi-resource confirm window comprises the multiple resources to be processed and the sending control; and
performing target processing on a first resource in response to a triggering operation on the multi-resource confirm window;
wherein the target processing comprises at least one selected from the group of:
adjusting an order in which the first resource is arranged among the multiple resources to be processed;
deleting the first resource from the multiple resources to be processed; and
adding the first resource to the multiple resource confirm window and using the first resource as a resource to be processed.

3. The method according to claim 2, wherein the target processing comprises: adding the first resource to the multi-resource confirm window and using the first resource as a resource to be processed; and
wherein the performing target processing on a first resource in response to a triggering operation on the multi-resource confirm window comprises:
displaying the multi-resource edit window in response to a triggering operation on an adding control in the multi-resource confirm window; and
adding the first resource to the multi-resource confirm window in response to a triggering operation on a resource option in the multi-resource edit window corresponding to the first resource.

4. The method according to any one of claims 1 to 3, wherein after determining multiple resources to be processed corresponding to at least one target option in response to a triggering operation on the at least one target option of the multiple second resource options, the method further comprises:
displaying a prompt message in the multiple resource edit window, wherein the prompt message is used for prompting at least one selected from the group of:
a number of resources remaining to be accommodated by a resource pack to be generated; and
value information for the multiple resources to be processed that have been accommodated by the resource pack to be generated;
wherein the value information is used for indicating at least one selected from the group of:
a total value of the multiple resources to be processed; and
a total value of the multiple resources to be processed having exceeded a target value.

5. The method according to any one of claims 1 to 4, wherein the resource panel comprises a tab bar region and an option display region, wherein the tab bar region is used for displaying tabs of the resource panel, and the option display region is used for displaying the multiple first resource options; and
the resource pack control is located in the tab bar region or the option display region.

6. The method according to any one of claims 1 to 5, wherein before determining multiple resources to be processed corresponding to at least one target option in response to a triggering operation on the at least one target option of the multiple second resource options, the method further comprises:
displaying multiple style options, wherein each style option of the multiple style options is used for indicating a resource pack style; and
determining a resource pack style indicated by a target style option as a style of the target resource pack in response to a triggering operation on the target style option of the multiple style options;
wherein the resource pack style comprises at least one selected from the group of:
a resource pack shape, a pattern on the resource pack, text on the resource pack, and a maximum number of resources allowed to be accommodated in the resource pack.

7. The method according to any one of claims 1 to 6, wherein before sending a processing request for a target resource pack to a server, the method further comprises:
displaying a packing dynamic effect for packing the multiple resources to be processed and generating the target resource pack;
wherein the packing dynamic effect comprises a dynamic effect in which the multiple resources to be processed sequentially enter the target resource pack, and the target resource pack is packaged.

8. The method according to any one of claims 1 to 7, wherein after sending a processing request for a target resource pack to a server in response to a triggering operation on the sending control, the method further comprises:
receiving a play instruction for the target resource pack that is sent from the server, wherein the play instruction is generated by the server upon the processing request; and
playing a combination display dynamic effect corresponding to the target resource pack based on the play instruction, wherein the combination display dynamic effect comprises an unpacking dynamic effect of the target resource pack and display dynamic effects of respective resources to be processed of the multiple resources to be processed.

9. The method according to claim 8, wherein playing a combination display dynamic effect corresponding to the target resource pack comprises:
in response to meeting a preset play condition, rendering the unpacking dynamic effect of the target resource pack via a first video layer in real time, and playing preset display dynamic effects of the respective resources to be processed sequentially via a second video layer in a target order;
otherwise, playing a preset unpacking dynamic effect of the target resource pack via the second video layer, and playing the preset display dynamic effects of the respective resources to be processed sequentially in a target order;
wherein the first video layer is located above the second video layer, the second video layer is located above a live-stream room video layer, and the target order is an order in which the respective resources to be processed are arranged in the target resource pack.

10. The method according to claim 9, wherein the multiple second resource options comprise a target type option, and the target type option is used for indicating multiple resources having a preset order;
the target type option comprises at least one selected from the group of:
a historical resource combination option, and a preset resource combination option;
wherein the at least one target option comprises a first target option, and the first target option is served as the target type option;
the first target option is used for indicating multiple first resources having a first order, and the multiple resources to be processed comprise the multiple first resources arranged in the first order;
wherein playing preset display dynamic effects of the respective resources to be processed sequentially in the target order, comprises:
playing preset display dynamic effects of the respective first resources sequentially in the first order.

11. The method according to claim 9, wherein playing a combination display dynamic effect corresponding to the target resource pack, further comprises:
in response to meeting the preset play condition, rendering display dynamic effects of identifications corresponding to the respective resources to be processed via the first video layer in real time after rendering the unpacking dynamic effect of the target resource pack via the first video layer in real time.

12. The method according to claim 11, wherein rendering display dynamic effects of identifications corresponding to the respective resources to be processed via the first video layer in real time, comprises:
rendering a dynamic effect of moving the identifications corresponding to the respective resources to be processed from the target resource pack to a preset position via the first video layer in real time; and
in response to playing a preset display dynamic effect of a first resource to be processed via the second video layer, rendering a dynamic effect of updating an identification of the first resource to be processed from a first display state to a second display state via the first video layer in real time.

13. A resource processing apparatus, comprising:
a display module, configured to display a resource panel on a live-stream room page, wherein the resource panel comprises multiple first resource options and a resource pack control; and
the display module is further configured to display a multi-resource edit window in response to a triggering operation on the resource pack control, wherein the multi-resource edit window comprises multiple second resource options and a sending control, and the multiple second resource options comprise at least one first resource option;
a determination module, configured to determine multiple resources to be processed corresponding to at least one target option in response to a triggering operation on the at least one target option of the multiple second resource options; and
a sending module, configured to send a processing request for a target resource pack to a server in response to a triggering operation on the sending control, wherein the target resource pack is generated based on the multiple resources to be processed, and the processing request is used for instructing to send the target resource pack to a live streamer client.

14. An electronic device, comprising a memory and a processor, wherein the memory is configured to store a computer program; and the processor is configured to implement the resource processing method of any one of claims 1 to 12, when invoking the computer program.

15. A computer-readable storage medium with a computer program stored thereon, wherein the computer program, when executed by a processor, implements the resource processing method of any one of claims 1 to 12.

16. A computer program product with a computer program stored thereon, wherein the computer program, when executed by a processor, implements the resource processing method of any one of claims 1 to 12.
